# FASCICULE DE BREVET EUROPEEN

(11) **EP 2 889 069 B1**
(45) Date de publication et mention de la délivrance du brevet: **03.01.2018**
(21) Numéro de dépôt: 14200236.9
(22) Date de dépôt: 23.12.2014
(51) Int. Cl.: B01D 33/15, B01D 33/80

(54) **Filtre pour liquide en écoulement libre**
Filter für frei fließende Flüssigkeit
Filter for free-flowing liquid

(30) Priorité: 23.12.2013 FR 1363445
(43) Date de publication de la demande: 01.07.2015
(73) Titulaire: Etablissements Faivre, 25110 Baume les Dames (FR)
(72) Inventeur: FAIVRE, Jean-Louis, 25000 BESANCON (FR)
(74) Mandataire: Novagraaf Technologies

(56) Documents cités:
- WO-A1-99/20367
- DE-A1- 3 235 003
- GB-A- 708 532

## Description

### Domaine technique

La présente invention concerne un filtre pour liquides en écoulement libre, utilisable pour filtrer par exemple de l'eau de pisciculture, en sortie de station d'épuration, ou un liquide chargé dans l'industrie.

### Etat de la technique

On connaît divers principes de filtre à écoulement libre pour éliminer des particules ou des charges telles que des flocules dans un liquide. Dans le domaine aquacole, ces filtres sont utilisés pour éliminer également les fèces des poissons.

Par exemple, un filtre à tambour comporte une entrée de liquide au centre d'un tambour muni d'une grille filtrante en périphérie. Le tambour tourne à petite vitesse de telle sorte que les boues retenues par le filtre passent en partie supérieure du tambour et ainsi montent au-dessus du niveau du liquide. Un lavage dans cette position permet d'éliminer les boues de la grille filtrante et de les récupérer pour les évacuer.

Le document GB 708,532 décrit un dispositif de filtration, par exemple pour l'eau de rivière, comprenant des roues montées rotatives et dont les parois sont filtrantes. Les roues comportent également un moyeu central ayant également une paroi filtrante. L'intérieur des roues est relié à un canal et l'extérieur à un autre canal, un courant d'eau circulant d'un canal à l'autre en passant par les parois filtrantes, de l'extérieur des roues vers l'intérieur. Des moyens de nettoyage par jets d'eau sont prévus, en association avec des canaux d'évacuation des résidus..

On connaît également un filtre à disques, tel que montré par exemple dans le document US 6,231,761 B1. Un tube central est monté rotatif sur deux paliers à ses extrémités. Il porte des disques formés de deux parois filtrantes en forme de rondelle et reliées par une paroi périphérique. Des ouvertures relient l'intérieur du tube à l'intérieur des disques. L'eau est déversée à l'intérieur du tube et pénètre à l'intérieur des disques. Elle traverse les parois filtrantes et est ensuite collectée dans une cuve d'où elle est alors évacuée. Une goulotte traverse le tube à l'intérieur pour recevoir des eaux de lavage provenant de jets situés à l'extérieur des disques et projetant l'eau sur les parois filtrantes, au-dessus de l'arbre.

Un tel filtre comporte plusieurs inconvénients.

Tout d'abord, le débit de l'installation est limité par la section du tube central. L'augmentation du débit n'est possible que par une augmentation importante du diamètre de l'ensemble qui devient alors très encombrant. Par ailleurs, l'eau doit arriver au-dessus de la partie supérieure du tube central, ce qui impose une perte de niveau dans l'écoulement de l'eau. Cette hauteur est d'autant plus importante qu'il faut loger la goulotte de récupération des eaux de lavage dans le tube central.

L'invention vise à fournir un filtre pour liquide à écoulement libre permettant des débits importants, de construction simple et limitant la perte de hauteur dans l'écoulement.

### Description de l'invention

Avec ces objectifs en vue, l'invention a pour objet un filtre pour liquides en écoulement libre comportant un canal d'entrée pour amener le liquide, un canal de sortie pour évacuer le liquide et une pluralité de tambours coaxiaux selon un axe de tambour horizontal, chaque tambour comportant deux parois filtrantes parallèles entre elles, la roue étant montée rotative sur un arbre s'étendant selon l'axe de tambour, caractérisé en ce que le canal d'entrée et le canal de sortie se situent respectivement de part et d'autre de la pluralité de tambours et sensiblement au même niveau dit de référence, et en ce que le filtre comporte des moyens de séparation pour séparer les canaux entre eux et pour relier l'intérieur des roues par leur périphérie à l'un des canaux parmi le canal d'entrée et le canal de sortie, et les espaces entre les roues à l'autre des canaux.

En choisissant une disposition d'alimentation du filtre avec des canaux latéraux, la longueur du filtre n'est pas limitée par des considérations de débit. En effet, pour une taille de paroi filtrante prédéterminée, et donc un débit par roue prédéterminé, il est possible d'augmenter le nombre de roues du filtre et la section des canaux pour augmenter le débit global du filtre. La conception et la fabrication d'un filtre de grande dimension est donc aisée. Il n'est en effet pas nécessaire de revoir la conception d'une roue, mais uniquement d'en augmenter le nombre. Par ailleurs, la circulation du liquide se faisant de l'intérieur de la roue vers l'extérieur, ou inversement, et les écoulements étant libres de part et d'autre, la pression exercée par le liquide sur les parois filtrantes est faible et les forces restent internes à la roue. La différence de hauteur dans l'écoulement est celle due uniquement à la perte de charge en traversant les parois filtrantes. On constate que pour de l'eau, celle-ci ne dépasse pas quelques centimètres, ce qui est bien plus avantageux que dans les filtres à disques connus.

Selon une disposition constructive, les moyens de séparation comportent pour chaque roue deux parois de séparation s'étendant à l'extérieur de ladite roue et jusqu'au niveau de référence au moins, les parois de séparation comportant une ouverture en regard des parois filtrantes en étant en liaison étanche en périphérie des parois filtrantes. On sépare ainsi l'amont et l'aval des parois filtrantes avec des parties fixes.

De manière particulière, des moyens d'étanchéité sont prévus entre les parois de séparation et les parois filtrantes en périphérie des parois filtrantes. On s'assure que tout le liquide passe à travers les parois filtrantes et ressort en étant ainsi filtré.

Selon une disposition particulière, les moyens de séparation sont prévus pour relier l'intérieur des roues par leur périphérie au canal d'entrée et les espaces entre les roues au canal de sortie. Le flux de liquide entrant passe à l'intérieur des roues et ressort de ceux-ci en traversant les parois filtrantes. Le flux continue entre les roues et rejoint le canal de sortie. Les sections de passage depuis le canal d'entrée ou vers le canal de sortie sont sensiblement équivalentes, ce qui permet une utilisation optimale du volume du filtre au profit du débit.

Selon des caractéristiques constructives de cette disposition, les moyens de séparation comportent des parois amont reliant les parois de séparation entre deux roues et séparant le canal d'entrée de l'espace entre lesdites roues. Ainsi, le canal d'entrée est séparé de l'espace entre les roues. Le liquide qu'il contient est dirigé vers l'intérieur des roues.

De même, les moyens de séparation peuvent comporter des parois aval reliant les parois de séparation d'une même roue en périphérie de celui-ci de manière à séparer la roue du canal de sortie. Ainsi le canal de sortie est séparé de l'intérieur des roues et reçoit le liquide en provenance de l'espace entre deux roues.

Selon une disposition constructive, le filtre comporte un arbre central s'étendant de manière fixe selon l'axe de roue, les roues étant montées rotatifs sur l'arbre central. Il n'est ainsi pas nécessaire de prévoir de paliers pour supporter l'arbre, ce qui simplifie la réalisation.

Selon un perfectionnement, l'arbre central est creux, et comporte des ouvertures supérieures en partie supérieure pour recevoir du liquide de lavage, le filtre comportant des moyens de lavage à l'extérieur de la roue pour envoyer le liquide de lavage contre la paroi filtrante au-dessus du niveau de référence. Le liquide de lavage est facilement recueilli et évacuer par l'arbre creux, même si l'intérieur de celui-ci est en-dessous du niveau de référence. Les moyens de lavage peuvent être facilement maintenus à l'extérieur des roues.

De manière complémentaire, des goulottes portées par l'arbre central reçoivent le liquide de lavage à l'intérieur de la roue et le canalise vers l'ouverture supérieure de l'arbre central. On s'assure ainsi que l'essentiel des boues qui se seraient déposées sur les parois filtrantes sont bien récupérées et dans les goulottes et évacuées.

Selon une disposition constructive, chaque paroi filtrante comporte deux demi-paliers démontables. On peut ainsi intervenir sur les paliers sans devoir extraire la roue concerné de l'arbre. Les opérations de maintenance en sont simplifiées. En effet, chaque demi-palier peut être extrait de l'arbre, contrairement à une bague qui entourerait l'arbre et qui devrait être glissée jusqu'à l'extrémité de l'arbre.

De manière complémentaire, le filtre comporte des moyens d'entraînement des roues en rotation. La partie immergée des parois filtrante s'extrait du liquide lors de la rotation de la roue. La paroi filtrante peut alors être nettoyée. Le mouvement peut être continu ou par séquences.

Selon une disposition constructive, les moyens d'entraînement comportent un arbre d'entraînement s'étendant parallèlement à l'axe de roue et des ensembles d'engrenages comportant une couronne dentée portée par la roue et un pignon denté porté par l'arbre d'entraînement.

Selon un perfectionnement, les ensembles d'engrenages sont débrayables par rapport à l'arbre d'entraînement. On peut ainsi immobiliser une roue individuellement, par exemple pour y mener des opérations de maintenance telle que le changement de palier ou de paroi filtrante. Le reste de l'installation continue de fonctionner.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue de dessus d'un filtre selon un mode de réalisation de l'invention ;
- la figure 2 est une vue en coupe selon la ligne II-II de la figure 1 ;
- la figure 3 est une vue en coupe selon la ligne III-III de la figure 1 ;
- la figure 4 est une vue en perspective d'une partie du filtre de la figure 1 représenté sans parois filtrantes ;
- la figure 5 est une vue en perspective d'une roue pour le filtre de la figure 1 représentée sans parois filtrantes ;
- la figure 6 est une vue en perspective du filtre de la figure 1, avec une seule roue représentée ;
- la figure 7 est une vue en perspective d'une cuve du filtre de la figure 1.

### DESCRIPTION DETAILLEE

Dans la description qui va suivre d'un filtre pour liquide en écoulement libre conforme à un mode de réalisation de l'invention, la direction verticale et horizontale, le haut et le bas, se réfèrent à une position d'utilisation du filtre.

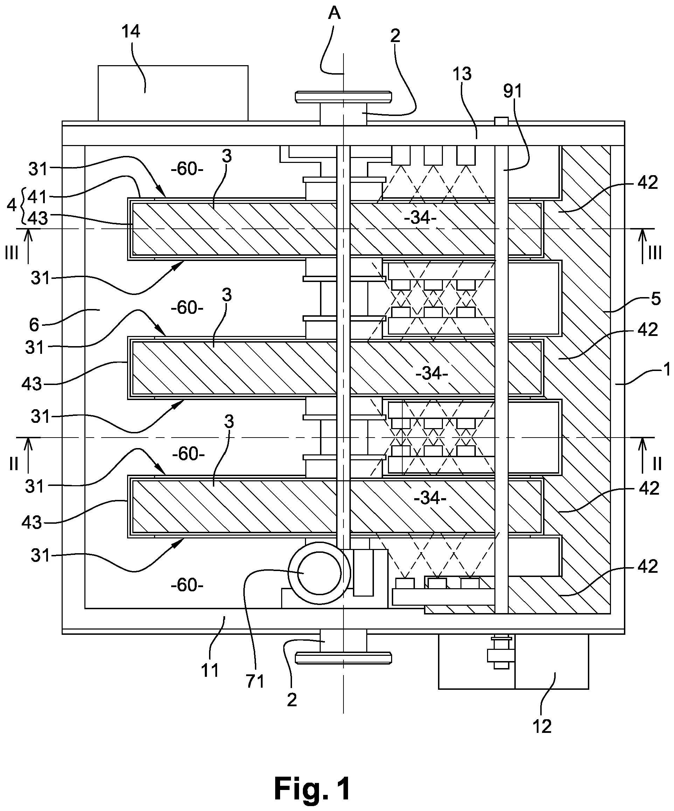

Un filtre pour liquide en écoulement libre, représenté sur les figures 1 à 7, comporte une cuve 1 en forme générale de parallélépipède rectangle ouvert vers le haut et comportant sur une paroi d'entrée 11 une bouche d'entrée 12 et sur une paroi de sortie 13 à l'opposé de la paroi d'entrée 11 une bouche de sortie 14. Les bouches 12, 14 sont situées à proximité d'angles opposés de la cuve 1. La cuve est fermée en bas par un fond 15.

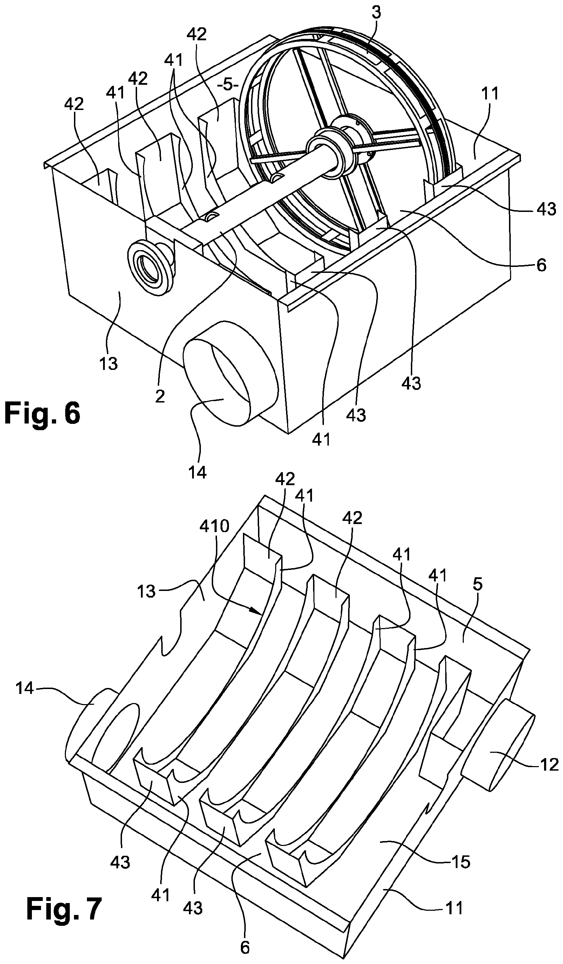

Le filtre comporte un arbre central 2 s'étendant de manière fixe selon un axe de roue A horizontal en étant supporté sur la paroi d'entrée 11 et sur la paroi de sortie 13, comme le montre en particulier la figure 6. L'axe de roue A est sensiblement au milieu de la cuve 1 vue en plan comme sur la figure 1, et plutôt vers le haut de la cuve 1. Le filtre est prévu pour fonctionner avec un écoulement libre de liquide depuis la bouche d'entrée 12 vers la bouche de sortie 14, avec un niveau de liquide pouvant atteindre un niveau dit de référence B. Le niveau de référence B est situé au-dessus de l'axe de roue A.

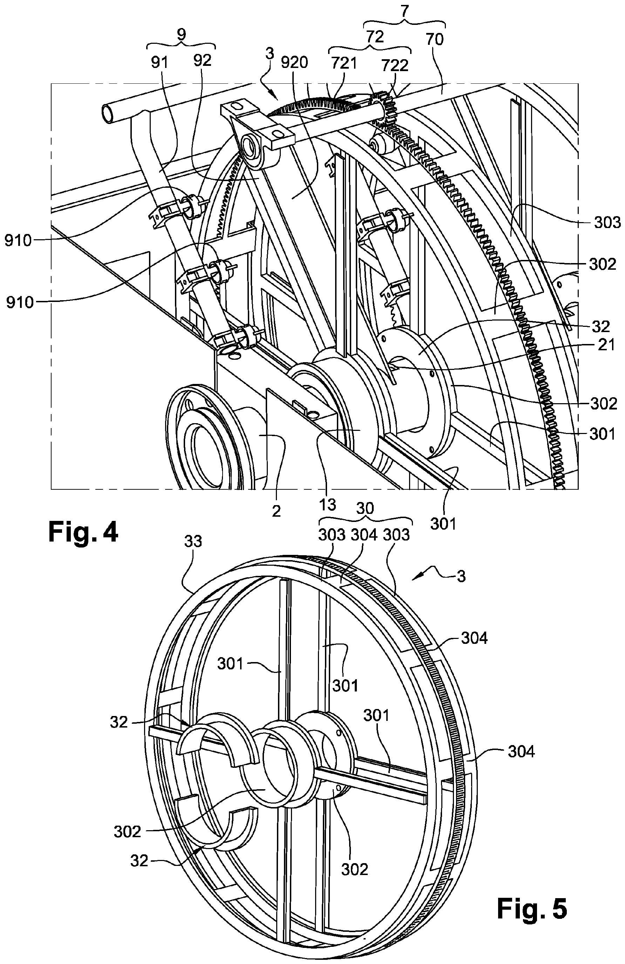

Le filtre comporte en outre une pluralité de roues 3 coaxiales montées rotatives sur l'arbre central 2 selon l'axe de roue A. Chaque roue 3 comporte une ossature 30 formée de deux croix 301 parallèles entre elles, d'une bague de palier 302 au centre de chaque croix 301, d'un anneau 303 périphérique de même centre que la bague de palier 302 sur chaque croix 301 et de traverses 304 reliant les anneaux périphériques 303. Chaque roue 3 comporte en outre deux parois filtrantes 31 parallèles entre elles et perpendiculaires à l'axe de roue A. Comme le montre la figure 5, deux demi-paliers 32 sont fixés de manière amovible sur chaque bague de palier 302 de manière à former un guidage en rotation de la roue 3 sur l'arbre central 2. L'arbre central 2 a une section circulaire.

Le filtre comporte en outre des moyens de séparation 4 pour délimiter deux canaux entre eux :
- un canal d'entrée 5 pour amener le liquide depuis la bouche d'entrée 12 ;
- un canal de sortie 6 pour évacuer le liquide jusqu'à la bouche de sortie 14.

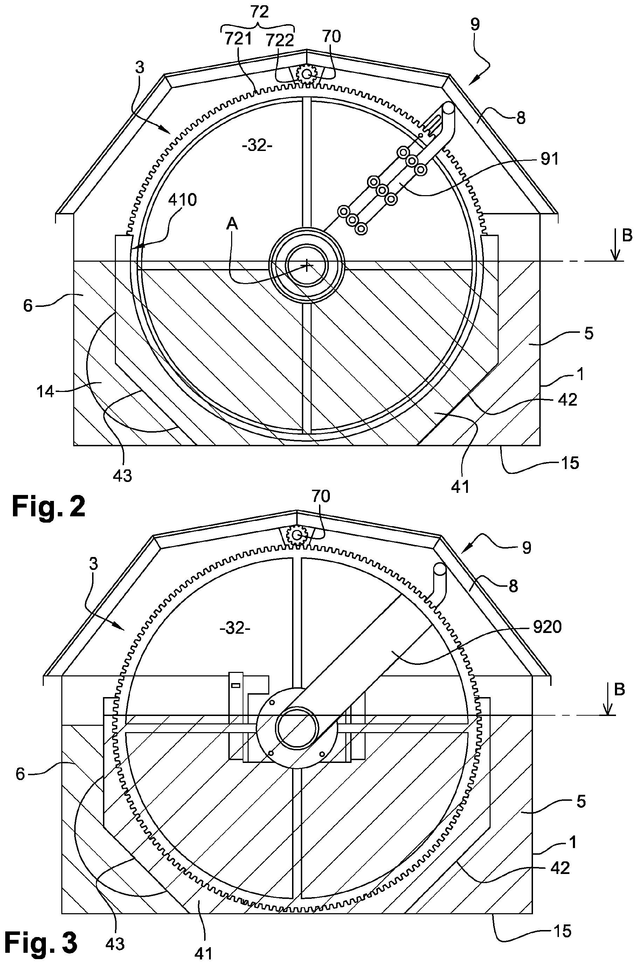

Les moyens de séparation 4 permettent en outre de relier l'intérieur 34 des roues 3 par leur périphérie au canal d'entrée 5, comme le montre la figure 3, et les espaces 60 entre les roues 3 au canal de sortie 6, comme le montre la figure 2. Le canal d'entrée 5 et le canal de sortie 6 se situent respectivement de part et d'autre de la pluralité de roues 3. Pour cela, les moyens de séparation 4 comportent pour chaque roue 3 deux parois de séparation 41 s'étendant à l'extérieur de la roue 3 et jusqu'au niveau de référence B au moins. Les parois de séparation 41 comportent une ouverture 410 en regard des parois filtrantes 31 en étant en liaison étanche en périphérie des parois filtrantes 31 par des moyens d'étanchéité. On a donc un petit recouvrement entre la paroi filtrante 31 et le bord de l'ouverture. Pour former l'étanchéité, un joint à lèvre 33 est prévu en périphérie de la roue 3, la lèvre venant en appui sur la paroi de séparation 41. Les moyens de séparation 4 comportent en outre des parois amont 42 reliant les parois de séparation 41 entre deux roues 3 et séparant le canal d'entrée 5 de l'espace entre lesdites roues 3. Les moyens de séparation 4 comportent également des parois aval 43 reliant les parois de séparation 41 d'une même roue 3 en périphérie de celui-ci de manière à séparer la roue 3 du canal de sortie 6. Ainsi, les parois amont et aval 42, 43 sont disposées en quinconce, vues de dessus. Les parois amont et aval 42, 43 s'étendent jusqu'au fond 15 de la cuve 1 avec lequel elles sont fixées, de même que les parois de séparation 41.

Le filtre comporte en outre des moyens d'entraînement 7 des roues 3 en rotation. Pour cela, les moyens d'entraînement 7 comportent un arbre d'entraînement 70 s'étendant parallèlement à l'axe de roue A en partie supérieure du filtre et supporté par des arceaux 8 s'étendant d'une paroi à l'autre de la cuve 1, parallèlement aux parois d'entrée et de sortie 11, 13. L'arbre d'entraînement 70 est entraîné par un motoréducteur 71 porté par l'un des arceaux 8. Le moyens d'entraînement 7 comportent des ensembles d'engrenages 72 comportant une couronne dentée 721 portée par la roue 3 et un pignon 722 denté porté par l'arbre d'entraînement 70. La couronne dentée 721 est portée par les traverses 304 de l'ossature 30 de la roue 3. Les ensembles d'engrenages 72 sont débrayables par rapport à l'arbre d'entraînement 70 par le fait que les pignons 722 peuvent être glissés individuellement sur l'arbre d'entraînement 70 et dégagés de l'engrènement avec les couronnes dentées 721.

Le filtre comporte par ailleurs des moyens de lavage 9 à l'extérieur du chaque roue 3 pour envoyer un liquide de lavage contre la partie des parois filtrantes 31 au-dessus du niveau de référence B. Pour cela, des rampes 91 comportent des buses 910 pour projeter le liquide de lavage sous pression. Les rampes 91 s'étendent de manière radiale entre les roues 3 et sont portées par les arceaux 8. Par ailleurs, des goulottes 92 portées par l'arbre central 2 s'étendent à l'intérieur 34 de la roue 3, reçoivent le liquide de lavage et le canalise vers des ouvertures supérieures 21 de l'arbre central 2. Chaque goulotte 92 comporte en outre un écran 920 vertical parallèle aux parois filtrantes 31, de manière à limiter l'éclaboussement d'une paroi filtrante 31 lorsque l'autre paroi est nettoyée. L'arbre central 2 est creux et canalise le liquide de lavage vers l'extérieur à une extrémité de l'arbre central 2. Une légère pente pourra lui être conférée pour faciliter l'évacuation du liquide de lavage.

### Fonctionnement

En fonctionnement, le filtre est installé avec une arrivée de liquide, par exemple l'eau d'un bassin piscicole, connectée à la bouche d'entrée 12, et une évacuation connectée à la bouche de sortie 14. Une pompe pourrait être installée au niveau de l'évacuation pour faire circuler le liquide en circuit fermé.

Le liquide emplit la cuve 1 jusqu'à un niveau en-dessous du niveau de référence B. Le réglage du niveau est déterminé par des dispositions prises à l'extérieur du filtre. Le niveau de référence B est inférieur au niveau des ouvertures supérieures 21 de l'arbre central 2 afin que le liquide ne soit pas évacué à la place prévue pour le liquide de lavage. Les ouvertures supérieures 21 peuvent éventuellement être rehaussées par des collerettes afin d'élever le niveau de référence B.

Le liquide chargé qui pénètre par la bouche d'entrée 12 se répartit dans le canal d'entrée 5 et à l'intérieur 34 des roues 3 en traversant la périphérie des roues 3 entre les traverses 304. L'avancement du liquide chargé est limité par les parois aval 43 et les parois de séparation 41. Le liquide traverse alors les parois filtrantes 31 vers les espaces 60 entre les roues 3. Ces espaces 60 sont en communication avec le canal de sortie 6 vers lequel le liquide filtré se dirige avant d'être évacué par la bouche de sortie 14.

Les charges du liquide sont retenues par les parois filtrantes 31. Le motoréducteur 71 fait tourner l'arbre d'entraînement 70 et donc les roues 3 à petite vitesse. Une partie immergée des parois filtrantes 31, sur laquelle les charges se sont accumulées sous forme de boue, sort du liquide et amène la boue au-dessus du niveau de référence B, au niveau des rampes 91 de lavage. Du liquide de lavage est projeté depuis l'extérieur des parois filtrantes 31 par les buses 910 de sorte à entraîner les boues hors des parois filtrantes 31. Les boues sont ainsi entraînées vers l'écran de la goulotte 92 et récoltées par celle-ci. Elles sont canalisées vers les ouvertures supérieures 21 et pénètre dans l'arbre central 2 pour être évacuées. La rotation des roues 3 et l'injection du liquide de lavage peuvent être intermittentes ou continues.

L'invention n'est pas limitée au mode de réalisation qui vient d'être décrit uniquement à titre d'exemple. Le sens du courant relatif aux parois filtrantes pourrait être inversé. Dans ce cas, les rampes 91 de lavage seraient à l'intérieur 34 des roues 3 et les goulottes à l'extérieur. La cuve pourrait être réalisée directement en génie civil et les moyens de séparation installés dans cette cuve après sa réalisation, par exemple en béton.

## Revendications

1. Filtre pour liquides en écoulement libre comportant :
- un canal d'entrée (5) pour amener le liquide ;
- un canal de sortie (6) pour évacuer le liquide ; et
- une pluralité de roues (3) coaxiales selon un axe de roue (A) horizontal, chaque roue (3) comportant deux parois filtrantes (31) parallèles entre elles, la roue (3) étant montée rotative sur un arbre central (2) s'étendant selon l'axe de roue (A) ;
**caractérisé en ce que** le canal d'entrée (5) et le canal de sortie (6) se situent respectivement de part et d'autre de la pluralité de roues (3) et sensiblement au même niveau dit de référence (B), et **en ce que** le filtre comporte des moyens de séparation (4) pour séparer les canaux (5, 6) entre eux et pour relier l'intérieur (34) des roues (3) par leur périphérie à l'un des canaux parmi le canal d'entrée (5) et le canal de sortie (6), et les espaces (60) entre les roues (3) à l'autre des canaux (5, 6), l' arbre central (2) s'étendant de manière fixe selon l'axe de roue (A), les roues (3) étant montées rotatives sur l'arbre central (2).

2. Filtre selon la revendication 1, dans lequel les moyens de séparation (4) comportent pour chaque roue (3) deux parois de séparation (41) s'étendant à l'extérieur de ladite roue (3) et jusqu'au niveau de référence (B) au moins, les parois de séparation (41) comportant une ouverture en regard des parois filtrantes (31) en étant en liaison étanche en périphérie des parois filtrantes (31).

3. Filtre selon la revendication 2, dans lequel des moyens d'étanchéité (33) sont prévus entre les parois de séparation (41) et les parois filtrantes (31) en périphérie des parois filtrantes (31).

4. Filtre selon l'une des revendications 1 à 3, dans lequel les moyens de séparation (4) sont prévus pour relier l'intérieur (34) des roues (3) par leur périphérie au canal d'entrée (5) et les espaces (60) entre les roues (3) au canal de sortie (6).

5. Filtre selon les revendications 2 et 3 prises en combinaison, dans lequel les moyens de séparation (4) comportent des parois amont (42) reliant les parois de séparation (41) entre deux roues (3) et séparant le canal d'entrée (5) de l'espace entre lesdites roues (3).

6. Filtre selon les revendications 3 ou 4, dans lequel les moyens de séparation (4) comportent des parois aval (43) reliant les parois de séparation (41) d'une même roue (3) en périphérie de celui-ci de manière à séparer la roue (3) du canal de sortie (6).

7. Filtre selon l'une des revendications 1 à 6, dans lequel l'arbre central (2) est creux, et comporte des ouvertures supérieures (21) en partie supérieure pour recevoir du liquide de lavage, le filtre comportant des moyens de lavage (9) à l'extérieur de la roue (3) pour envoyer le liquide de lavage contre la paroi filtrante (31) au-dessus du niveau de référence (B).

8. Filtre selon la revendication 7, dans lequel des goulottes (92) portées par l'arbre central (2) reçoivent le liquide de lavage à l'intérieur (34) de la roue (3) et le canalise vers l'ouverture supérieure de l'arbre central (2).

9. Filtre selon l'une des revendications 7 à 8, dans lequel chaque paroi filtrante (31) comporte deux demi paliers (32) démontable.

10. Filtre selon l'une des revendications précédentes, **caractérisé en ce qu'**il comporte des moyens d'entraînement (7) des roues (3) en rotation.

11. Filtre selon la revendication 10, dans lequel les moyens d'entraînement (7) comportent un arbre d'entraînement (70) s'étendant parallèlement à l'axe de roue (A) et des ensembles d'engrenages (72) comportant une couronne dentée (721) portée par la roue (3) et un pignon (722) denté porté par l'arbre d'entraînement (70).

12. Filtre selon la revendication 11, dans lequel les ensembles d'engrenages (72) sont débrayables par rapport à l'arbre d'entraînement (70).

## Patentansprüche

1. Filter für frei fließende Flüssigkeiten umfassend:
- einen Einlaufkanal (5) für die Zuführung der Flüssigkeit;
- einen Auslaufkanal (6) für den Ablauf der Flüssigkeit; und
- eine Vielzahl von koaxialen Rädern (3) entlang einer horizontalen Radachse (A), wobei jedes Rad (3) zwei zueinander parallele Filterwände (31) aufweist, wobei das Rad drehbar auf einer zentralen Welle (2) montiert ist, die sich entlang der Radachse (A) erstreckt;
**dadurch gekennzeichnet, dass** der Einlaufkanal (5) und der Auslaufkanal (6) sich jeweils auf beiden Seiten der Vielzahl der Räder und im wesentlichen auf gleicher Ebene, Bezugsebene (B) genannt, befinden und dadurch, dass der Filter Trennmittel (4) aufweist, um die Kanäle (5,6) voneinander zu trennen und das Innere (34) der Räder (3) an ihrer Peripherie mit einem der Kanäle, Einlaufkanal (5) oder Auslaufkanal (6), und die Räume (60) zwischen den Rädern (3) mit dem anderen der Kanäle (5,6) zu verbinden, wobei die zentrale Welle (2) sich fest entlang der Radachse (A) erstreckt, und die Räder (3) drehbar auf der zentralen Welle (2) montiert sind.

2. Filter nach Anspruch 1, in dem die Trennmittel (4) für jedes Rad (3) zwei Trennwände (41) aufweisen, die sich auf der Außenseite des Rads (3) und mindestens bis in den Bereich der Bezugsebene B erstrecken, wobei die Trennwände (41) eine Öffnung mit Blick auf die Filterwände in dichter Verbindung am Umfang der Filterwände (31) aufweisen.

3. Filter nach Anspruch 2, in dem Dichtungsmittel (33) zwischen den Trennwänden (41) und den Filterwänden (31) am Umfang der Filterwände (31) vorgesehen sind.

4. Filter nach einem der Ansprüche 1 bis 3, in dem die Trennmittel (4) dazu vorgesehen sind, das Innere (34) der Räder (3) an ihrer Peripherie mit dem Einlaufkanal (5) und die Räume (60) zwischen den Rädern (3) mit dem Auslaufkanal (6) zu verbinden.

5. Filter nach den Ansprüchen 2 und 3 in Verbindung genommen, in dem die Trennmittel (4) stromaufwärtige Wände (42) umfassen, welche die Trennwände (41) zwischen zwei Rädern (3) verbinden und den Einlaufkanal (5) von dem Raum zwischen den Rädern (3) trennen.

6. Filter nach den Ansprüchen 3 oder 4, in dem die Trennmittel (4) stromabwärtige Wände (43) umfassen, welche die Trennwände (41) eines selben Rades (3) an der Peripherie desselben so verbinden, dass das Rad (3) von dem Auslaufkanal (6) getrennt wird.

7. Filter nach einem der Ansprüche 1 bis 6, in dem die zentrale Welle (2) hohl ist und obere Öffnungen (21) im oberen Teil aufweist, um die Waschflüssigkeit aufzunehmen, wobei der Filter Mittel zum Waschen (9) an der Außenseite der Räder (3) aufweist, um die Waschflüssigkeit gegen die Filterwand (31) oberhalb der Bezugsebene (B) zu befördern.

8. Filter nach Anspruch 7, in dem Rinnen (92) die von der zentralen Welle (2) getragen werden, die Waschflüssigkeit (34) innen im Rad (3) aufnehmen und sie in Richtung der oberen Öffnung der zentralen Welle (2) kanalisieren.

9. Filter nach einem der Ansprüche 7 bis 8, in dem jede Filterwand (31) zwei ausbaubare Halblager aufweist.

10. Filter nach einem der vorhergehenden Ansprüche, **dadurch gekennzeichnet, dass** er Antriebsmittel (7) zum Drehen der Räder (3) umfasst.

11. Filter nach Anspruch 10, in dem die Antriebsmittel (7) eine Antriebswelle umfassen (70), die sich parallel zur Radachse (A) erstreckt und Zahnradsätze (72), die einen von dem Rad (3) getragenen Zahnring (721) und ein von der Antriebswelle (70) getragenes Zahnrad (722) umfassen.

12. Filter nach Anspruch 11, in dem die Zahnradsätze (72) im Bezug auf die Antriebswelle (70) ausgekuppelt werden können.

## Claims

1. A filter for free-flowing liquids, including:
- an inlet channel (5) for bringing in the liquid;
- an outlet channel (6) for discharging the liquid; and
- a plurality of wheels (3), coaxial around a horizontal wheel axis (A), each wheel (3) including two mutually parallel filtering walls (31), the wheel (3) being mounted in rotation on a central shaft (2) extending along the wheel axis (A);
**characterized in that** the inlet channel (5) and the outlet channel (6) are situated respectively on either side of the plurality of wheels (3) and substantially at the same so-called reference level (B), and **in that** the filter includes separation means (4) for separating the channels (5, 6) from one another and for connecting the interior (34) of the wheels (3) by their perimeter to one of the channels among the inlet channel (5) and the outlet channel (6), and spaces (60) between the wheels (3) to the other of the channels (5, 6), the central shaft (2) extending in a fixed manner along the wheel axis (A), the wheels (3) being mounted in rotation on the central shaft (2).

2. The filter according to claim 1, wherein the separation means (4) include, for each wheel (3), two separation walls (41) extending outside said wheel (3) and at least until the reference level (B), the separation walls (41) including an opening facing the filtering walls (31) while having a sealed connection with the perimeter of the filtering walls (31).

3. The filter according to claim 2, wherein sealing means (33) are provided between the separation walls (41) and the filtering walls (31) at the perimeter of the filtering walls (31).

4. The filter according to one of claims 1 to 3, wherein the separation means (4) are provided to connect the interior (34) of the wheels (3) at their perimeter to the inlet channel (5) and the spaces (60) between the wheels (3) to the outlet channel (6).

5. The filter according to claims 2 and 3 taken in combination, wherein the separation means (4) include upstream walls (42) connecting the separation walls (41) between two wheels (3) and separating the intake channel (5) from the space between said wheels (3).

6. The filter according to claims 3 or 4, wherein the separation means (4) include downstream walls (43) connecting the separation walls (41) of the same wheel (3) at the perimeter thereof so as to separate the wheel (3) from the outlet channel (6).

7. The filter according to one of claims 1 to 6, wherein the central shaft (2) is hollow, and includes upper openings (21) in the upper portion to receive washing liquid, the filter including washing means (9) outside the wheel (3) to send the washing liquid against the filtering wall (31) above the reference level (B).

8. The filter according to claim 7, wherein the ducts (92) carried by the central shaft (2) receive the washing liquid inside (34) the wheel (3) and channel it toward the upper opening of the central shaft (2).

9. The filter according to one of claims 7 to 8, wherein each filtering wall (31) includes two removable half-bearings (32).

10. The filter according to one of the preceding claims, **characterized in that** it includes means (7) for driving the wheels (3) in rotation.

11. The filter according to claim 10, wherein the drive means (7) include a drive shaft (70) extending parallel to the wheel axis (A) and gear sets (72) including a ring gear (721) carried by the wheel (3) and a sprocket (722) carried by the drive shaft (70).

12. The filter according to claim 11, wherein the gear sets (72) can be declutched with respect to the drive shaft (70).
